# DEMANDE DE BREVET EUROPEEN

(11) **EP 3 330 881 A1**
(43) Date de publication de la demande: **06.06.2018**
(21) Numéro de dépôt: 16306595.6
(22) Date de dépôt: 01.12.2016
(51) Int. Cl.: G06F 21/62, H04L 29/06, H04L 29/08, G06Q 20/40, H04W 12/06

(54) **PROCEDE ET SYSTEME POUR SECURISER DES OPERATIONS SENSIBLES REALISEES DANS UN ENVIRONNEMENT DE COMMUNICATION NON SECURISE**

(71) Demandeur: GEMALTO SA, 92190 Meudon (FR)
(72) Inventeur: HUGOT, Didier, 13881 Gemenos Cedex (FR); DER-KRIKORIAN, Anthony, 13881 Gemenos Cedex (FR)

(57) **Abrégé**

L'invention concerne un procédé pour sécuriser une opération sensible entre une unité de traitement comprenant un navigateur informatique et un serveur de service d'un réseau de communication (5), une requête (RT1) pour ou déclenchant ladite opération sensible étant adressée au serveur de service (3) ; Le procédé est caractérisé en ce qu'il comprend les étapes suivantes :
- installation d'un serveur de confiance (TS) et mémorisation d'un programme de confiance (P1) de type client dans le navigateur (P0) ou dans l'unité de traitement (2) ou dans le réseau de communication (5),
- redirection (RT2) de ladite requête (RT1) d'opération sensible vers ledit serveur de confiance (TS),
- réalisation de tout ou partie de ladite opération sensible entre ledit serveur de confiance (TS) et ledit programme de confiance (P1) suite à ladite redirection.

L'invention concerne également un système correspondant au procédé.

## Description

### Domaine de l'invention.

L'invention concerne un procédé et système pour sécuriser des opérations sensibles réalisées dans un environnement de communication non sécurisé.

Elle concerne des environnements matériels et logiciels de communication mettant en oeuvre des navigateurs de communication internet mais peut concerner d'autres types de communication ou de réseau de communication notamment local intranet, téléphonique, radiofréquence, Bluetooth™, Wi-Fi™ ou autre communication filaire ou sans fil.

Un navigateur de communication tel un navigateur internet est un programme logiciel permettant à un ordinateur de consulter et/ou d'échanger des informations disponibles sur un autre ordinateur notamment via internet ou autre réseau de communication.

L'invention concerne donc plus particulièrement un procédé et système pour sécuriser des opérations sensibles via un navigateur web non sécurisé. Elle concerne également les navigateurs Web sécurisés et ordinateurs comportant de tels navigateurs.

Il existe différents navigateurs web, selon différents systèmes d'exploitation (GNU/Linux™, Windows™, iOS™, Android™...) et/ou selon le type d'ordinateur (ordinateur personnel PC, tablette tactile, téléphones mobiles, PDA, etc.)

Les plus utilisés à l'heure actuelle sont Mozilla Firefox™, Google-Chrome™, Internet Explorer™ ; Edge™, Safari™.

### Art antérieur.

Il existe des solutions de sécurisation des transactions qui utilisent des navigateurs sécurisés ou de confiance mais ces dernières ne sont pas faciles à mettre en oeuvre concrètement. En effet, ces solutions requièrent l'installation d'un navigateur spécifique sécurisé (ou d'une application logicielle spécifique).

Cependant, les utilisateurs sont trop habitués à leur propre navigateur courant du marché tel que « Google Chrome™, Edge™, Firefox™ » et ne sont pas prêts à installer et/ou utiliser un autre navigateur spécifique à la place.

Il existe aussi des extensions du navigateur courant mais cela exige également une intervention de l'utilisateur.

### Problème technique.

Les navigateurs Web non-sécurisés sont utilisés dans des ordinateurs pour effectuer des opérations sensibles en ligne (authentification sur un site internet bancaire, transaction de paiement, authentification ...), il peut y avoir des attaques frauduleuses dans le navigateur (ou l'ordinateur) notamment du type HDN (Homme dans le navigateur : Man-in-the-browser en anglais) ou des attaques par détection de frappe de clavier. Il peut également y avoir des attaques du type HDM (homme dans le milieu : Man-in-the-Middle en anglais) ou l'attaque peut s'effectuer au niveau du réseau à n'importe quel endroit entre le navigateur et le serveur.

L'invention a pour premier objectif une solution pour effectuer des opérations sécurisées dans un environnement non sécurisé qui est le navigateur Internet. Elle peut impliquer un stockage d'information sensible dans l'environnement non sécurisé.

L'invention envisage également une solution permettant de déployer un environnement sécurisé sur les navigateurs Web non sécurisés (ou qui ne sont pas de confiance).

De préférence, ce déploiement vise à être le plus transparent possible pour l'utilisateur final (pas ou le moins d'action possible de l'utilisateur final) afin de faciliter et maximiser une adoption générale d'une telle solution.

### Résumé de l'invention.

L'invention a pour objet un procédé pour sécuriser une opération sensible entre une unité de traitement comprenant un navigateur informatique et un serveur de service d'un réseau de communication, une requête pour (ou déclenchant) ladite opération sensible étant adressée au serveur de service ; Le procédé est caractérisé en ce qu'il comprend les étapes suivantes :
- installation d'un serveur de confiance TS et mémorisation d'un programme de confiance P1 de type client dans le navigateur P0 ou dans l'unité de traitement 2 ou dans le réseau de communication,
- redirection de ladite requête d'opération sensible vers ledit serveur de confiance TS,
- réalisation de tout ou partie de ladite opération sensible entre ledit serveur de confiance TS et ledit programme de confiance P1 suite à ladite redirection.

Ainsi, l'invention permet d'avoir les informations et les opérations sensibles sont traitées de manière plus sécurisée dans un environnement non sécurisé (le navigateur Internet) ;
Avantageusement, la mise en place et l'utilisation sont transparentes pour l'utilisateur (aucune ou quasiment aucune action de l'utilisateur en fonctionnement ou pour installer une extension logicielle).

Selon d'autres caractéristiques :
- Le programme client P1 peut être mémorisé en sécurité par le serveur de confiance (ou par un chargement sécurisé) ;
- Le programme client P1 peut être mémorisé dans le nuage informatique (cloud) ;
- Des clés de chiffrement peuvent être mémorisées dans l'ordinateur de l'utilisateur notamment dans son navigateur pour un établir un canal de communication sécurisé avec le serveur de confiance ;

L'invention a également pour objet un système pour sécuriser une opération sensible entre une unité de traitement comprenant un navigateur informatique P0 et un serveur de service d'un réseau de communication, ledit serveur de service comprenant une interface matérielle et/ou logicielle configurée pour recevoir une requête pour ou déclenchant ladite opération ; Le système est caractérisé en ce qu'il comprend :
- un serveur de confiance TS,
- un programme de confiance de type client mémorisé dans le navigateur P0 ou dans l'unité de traitement ou dans le réseau de communication,
- une interface matérielle et/ou logicielle de redirection pour rediriger vers ledit serveur TS, ladite requête d'opération sensible,
- au moins un programme serveur de confiance (P4, P11) dans le serveur de confiance (TS) pour gérer un cycle de vie du programme de confiance P1 et/ou pour réaliser toute ou partie de ladite opération sensible entre ledit serveur de confiance (TS) et ledit programme de confiance (P1) suite à la redirection.
- La gestion dudit cycle de vie ci-dessus peut s'effectuer de préférence suite à ladite redirection (RT2) mais peut s'effectuer à un autre moment notamment lors d'une campagne de déploiement d'un environnement de sécurité à un ensemble d'utilisateurs EU ou unités 2 ou navigateurs. De même, la réalisation de tout ou partie de ladite opération sensible (RT2) peut s'effectuer de préférence suite à la redirection ou peut être sous-traitée directement (ou via une redirection) par le serveur de service au serveur de confiance.

Selon d'autres caractéristiques / mode de mise en oeuvre ou de réalisation :
- Le programme client est mémorisé en sécurité par le serveur de confiance ou par un chargement sécurisé ;
- Des clés de chiffrement sont mémorisées dans l'ordinateur de l'utilisateur notamment dans son navigateur pour un établir un canal de communication sécurisé avec le serveur de confiance
- Le programme et /ou les clés sont mémorisés selon une méthode de chiffrement du type WBC « White-Box Cryptography » en anglais), chiffrement homomorphique ou bien d'une façon plus générale tout autre technique avancée d'offuscation ou de chiffrement permettant de protéger l'accès aux données sensibles (clés, certificats, algorithme...).

Optionnellement, le fournisseur de service peut garder un contrôle complet des opérations sécurisées ou peut déléguer / sous-traiter / gérer des services à l'aide du serveur de confiance. - Avantageusement, le serveur de confiance peut être géré par le fournisseur de service. Le serveur de confiance peut être proposé à des fournisseurs de service comme un service (managé par un tiers propriétaire du serveur) pour gérer de multiples fournisseurs de service.
L'opération de confiance peut être déléguée en totalité ou bien en partie au serveur de confiance.

### Brève description des figures.

- Les figures 1-2 illustrent un environnement de confiance entre le navigateur d'un ordinateur et un serveur de fournisseur de services (site internet) selon un mode préféré de mise en oeuvre / réalisation de l'invention ;
- La figure 2 illustre un diagramme des étapes pour un accès sécurisé à un service ;
- Les figures 3A, 3B illustrent un exemple des étapes pour l'installation la première fois qu'une opération de sécurité est requise ;
Les figures 4A, 4B illustrent un exemple de fonctionnement de l'environnement sécurisé de l'invention pour authentifier l'utilisateur sur un site internet.

### Description.

Dans les dessins, les mêmes références indiquent des éléments identiques ou similaires.

De même, dans la description et dessins, chaque étape du procédé peut correspondre à une étape (ou instruction) d'un programme informatique (et inversement). Un même effet que celui résultant d'une mise en oeuvre d'étape, se produit lorsque des instructions d'un programme correspondant à des étapes sont exécutées par un serveur informatique ou toute unité de traitement informatique quelconque tel un ordinateur, microprocesseur, ou microcontrôleur.

Dans l'exemple préféré, l'invention propose de créer un environnement de confiance de type « client-serveur » développé plus en détail ci-après, entre un navigateur informatique P0 (ou ordinateur 2 d'un utilisateur) et un serveur 3 d'un fournisseur (ou prestataire) de service sur internet.

Pour rappel, un environnement de type client-serveur peut mettre en oeuvre un certain mode de communication entre plusieurs programmes ou logiciels et/ou ordinateurs et à travers un réseau de communication.

Le programme (ou ordinateur) client émet des requêtes tandis qu'au moins un autre programme (ordinateur de serveur), reçoit, traite les requêtes et y répond le cas échéant.

En général, un serveur comprend un ordinateur et un programme spécifique servant à faire fonctionner le serveur selon une fonction spécifique, des entrées-sorties et des connexions réseau de communication.

Un programme client (ou ordinateur client peut comprendre un ordinateur personnel ou autre appareil intelligent portable tels que (téléphone mobile, PDA, tablette...).

A titre d'exemple, un serveur de données a pour fonction de communiquer des données stockées dans une base de données, un serveur web a pour fonction d'envoyer des pages web à la demande de navigateurs web d'ordinateur d'un utilisateur ; un serveur de courriels électroniques a pour fonction d'envoyer des courriels demandés par un logiciel de messagerie (tel que OUTLOOK) d'un ordinateur d'utilisateur.

Par exemple, un serveur peut fonctionner comme ci-après. Il attend une connexion entrante sur un port du réseau, il ouvre une interface de communication, puis le programme serveur communique avec le client suivant un protocole de communication prévu.
Par exemple, un client peut fonctionner comme ci-après. Il établit la connexion au serveur à destination d'un ou plusieurs ports réseaux ; Lorsque la connexion est acceptée par le serveur, il communique selon le même protocole de communication.

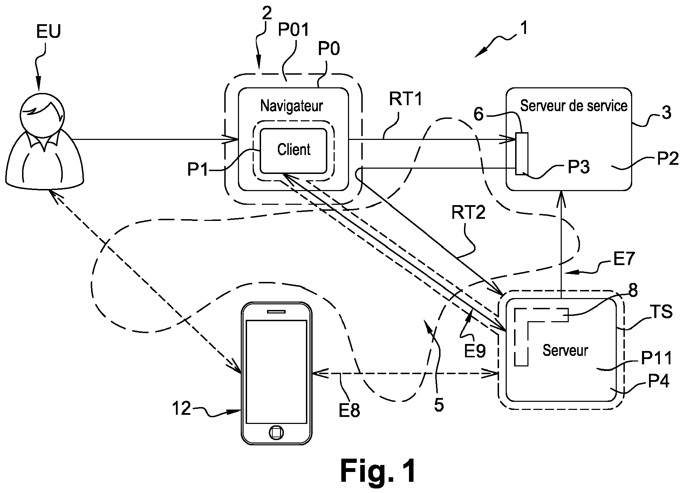

A la figure 1 est illustré, selon un premier mode préféré de réalisation de l'invention, un système général 1 pour sécuriser des transactions entre une unité de traitement 2 et un serveur de service 3.

Dans l'exemple, l'unité de traitement 2 est un ordinateur ; Toutefois elle peut être une tablette, un PDA, un téléphone portable. L'unité comporte des moyens matériels et logiciel de type connu de communication sur internet. La communication peut s'effectuer avec des serveurs notamment de sites marchands ou autres sites dotés d'un serveur de service quelconque notamment de vente, santé, fiscal, impôt, stockage...

Le téléphone portable dans la figure 1 (où la navigation se fait sur un ordinateur) peut notamment être utilisé pour :
- L'enrôlement et le provisionnement du logiciel sécurisé dans le navigateur (comme le navigateur n'est pas sécurisé, on ne peut pas l'utiliser pour authentifier l'utilisateur). Donc, on utilise de préférence le mobile pour effectuer une authentification « Hors bande » et éventuellement échanger des données sécurisées en plus de l'authentification ;
- Optionnellement, le téléphone portable, peut également intervenir dans la gestion de l'opération sécurisée comme par exemple pour demander à l'utilisateur de saisir un PIN.

Selon ce mode préféré, le système est configuré pour adresser des requêtes de transaction RT1 au serveur de service 3 par l'intermédiaire d'un navigateur internet P0 de ladite unité 2.

Dans l'exemple, l'unité 2 comprend un navigateur internet P0 (ou équivalent) qui permet notamment de rechercher et/ou afficher et/ou dialoguer et/ou interagir et/ou échanger des informations, des pages internet d'un site ou serveur de service 3.

Elle comprend implicitement une interface homme / machine ; L'interface peut être un clavier, un écran, une souris, un micro, un capteur d'empreinte, éventuellement un objet d'authentification tel une clé USB (connecté à l'ordinateur), ou une souri d'ordinateur pour sélectionner, remplir des champs affichés, valider par un clic sur des champs, cliquer sur des liens URL contenu dans une page affichée. L'unité peut comprendre tout autre logiciel P01 nécessaire à son fonctionnement.

Selon la solution préférée, appelée « environnement d'exécution de confiance pour navigateur web » le système de l'invention comprend les deux éléments principaux ci-après. Le système comprend d'une part a), un serveur de confiance (ordinateur TS, configuré avec au moins un programme de type serveur P4 ou P11) dans le réseau internet 5 ; d'autre part b), le système 1 comprend un programme de confiance P1 de type client dans ce navigateur internet P0.

Alternativement, P1 peut être mémorisé tout ou partie (ou réparti) dans l'unité de traitement et/ou dans une mémoire d'un élément informatique du réseau de communication (du nuage informatique) ou en relation de communication (ou association) avec le programme P0 de l'unité 2.

Le programme client P1 peut coopérer avec le navigateur P0. De préférence, le programme P1 prend le contrôle de l'opération sensible éventuellement en relation avec le navigateur. Le programme P1 peut interagir avec les pages web affichées dans le navigateur d'une part et le serveur de confiance au travers du réseau internet d'autre part.

### Concernant le serveur de confiance TS.

Concernant a) dans l'exemple, le serveur de confiance TS est hébergé en arrière-plan dans le nuage (cloud) 5 (ou réseau internet) ; Il est configuré pour interagir en mode client-serveur en toute sécurité avec le programme « client » P1 (ou P0) et donc l'utilisateur EU via son ordinateur 2. Optionnellement, le serveur de confiance peut être hébergé également par un serveur de fournisseur de service d'une société agissant comme tiers de confiance ;

Le serveur de confiance peut être configuré de préférence pour réaliser les fonctions ci-après :
- recevoir et envoyer des requêtes de transactions sécurisés (et retours) ;
- relayer des opérations sécurisées au navigateur de l'utilisateur (ou à ses dispositifs de traitement) ;
- gérer des communications hors bande (out-of-band) via des canaux de communication parallèles avec un autre appareil de l'utilisateur notamment à des fins de confirmation, d'authentification...).
- Le serveur de confiance peut également avoir la responsabilité de gérer le cycle de vie du programme de confiance P1 installé dans le navigateur P0 ou unité 2 (pouvant comprendre notamment un déploiement ou un provisionnement, une utilisation, une activation / désactivation / suppression / mise à jour de tout ou partie de P1) via un programme P4 ou P11 prévu à cet effet ;
- Optionnellement, le serveur de confiance peut agir au nom du fournisseur de service, comme un proxy sécurisé entre le fournisseur de service et l'utilisateur. Ainsi, seul le fournisseur de service peut connaître le nom de l'utilisateur et contrôler les opérations de transaction (ex. la vérification des informations d'identification comprenant par exemple des droits, identifiants, mots de passe, justificatifs, certificats de l'utilisateur,...). Le serveur de confiance peut donc ignorer le nom de l'utilisateur.

Le serveur TS peut essentiellement créer une session avec les données communiquées par le fournisseur de service de manière à traiter une opération / transaction sensible spécifique en toute sécurité.

Le serveur de confiance TS peut également proposer des services de sous-traitance aux fournisseurs de service et avoir donc la responsabilité de réaliser des opérations / transactions au nom et place de chaque fournisseur de service.

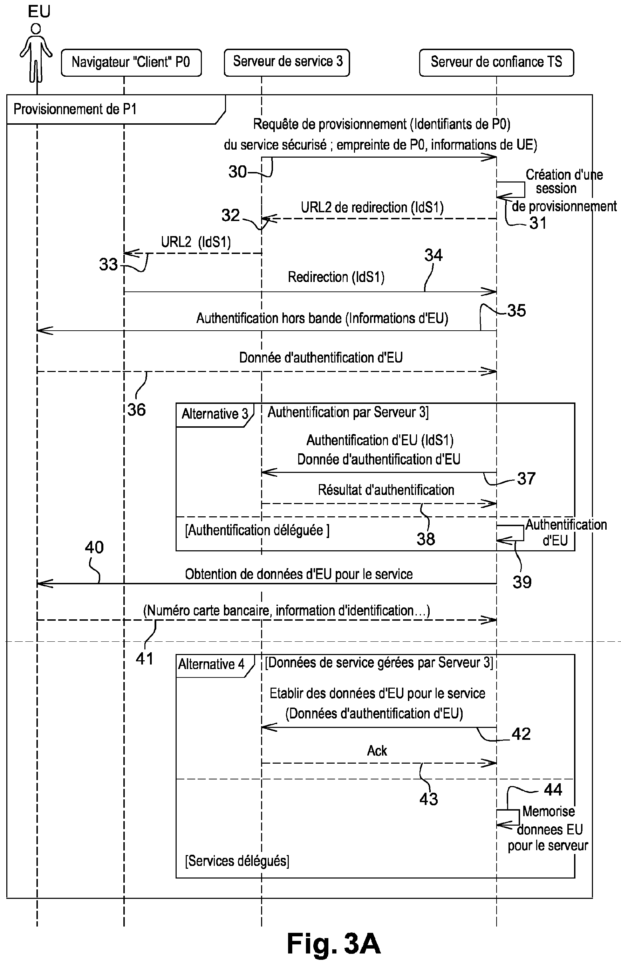

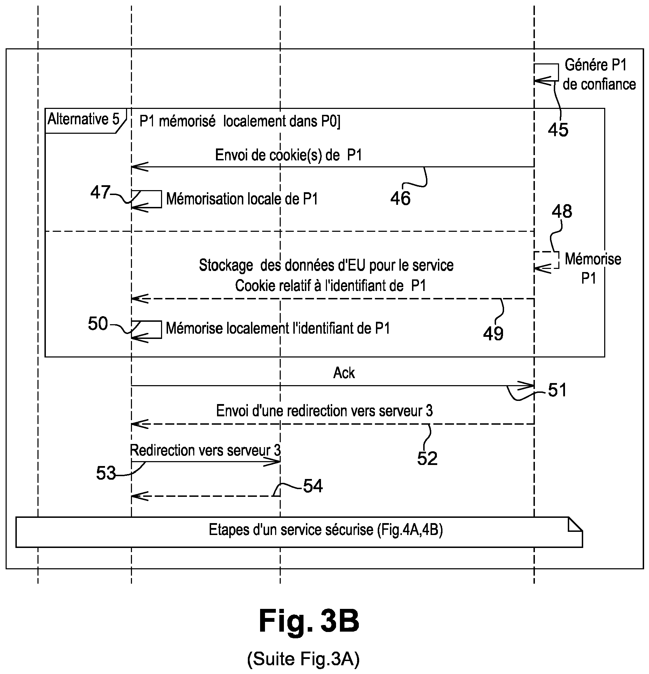

Le serveur TS comprend un programme P4 (dont les instructions peuvent correspondre aux étapes de la figure 3A et 3B mises en oeuvre par le serveur TS). En particulier, il peut comporter des instructions capables de renseigner des requêtes de statut du serveur de service 3 pour un service sécurisé en relation avec une unité 2 ou un client P0.

A cet effet, le serveur TS peut comprendre ou accéder à des renseignements (données) relatifs au niveau de sécurité (ou de confiance) de l'environnement informatique (client/serveur) dans lequel l'opération sensible va être exécutée.

Le serveur TS peut comprendre une mémoire interne ou accéder à une mémoire externe stockant (notamment sous forme de tableau) un ensemble de statuts relatif à un ensemble d'unités 2 d'un ensemble d'utilisateurs (ou d'abonnés).

Le tableau peut comporter en entrée, un identifiant de l'unité (ou du navigateur P0 ou P1) ou une référence vers une caractéristique biométrique ou tout autre identifiant de l'utilisateur ou un nom utilisateur ; et en correspondance (ou sortie), le tableau peut avoir des valeurs de sécurité et/ou des clés de chiffrement et/ou une indication d'un provisionnement d'un environnement de sécurité associé à la donnée de l'entrée, d'une date, d'une version de sécurité, du niveau de sécurité.

Le serveur TS peut également comporter (mémorisées dans le tableau ou ailleurs) en correspondance avec les données ci-dessus en entrée du tableau, des informations sensibles liées à l'utilisateur comme des informations de connexions, des données bancaires, des certificats, des mots de passe, une empreinte ou des données représentatives de ces valeurs. Ces informations sensibles liées à l'utilisateur peuvent être nécessaires à l'utilisation du service du serveur 3 comme un niveau de crédit, de débit, une identification bancaire PAN, IBAN, etc.

En exécution, le programme P4 du serveur TS conduit à consulter sur demande (ou automatiquement en réponse à un événement quelconque), le tableau de statuts ci-dessus suite à une requête et peut y répondre en transmettant les renseignements demandées.

Le serveur TS peut comprendre également un programme lié ou non à P4 pour générer et/ou installer et/ou déployer et/ou mettre à jour un environnement de confiance selon l'invention. L'exécution de ce dernier programme (de déploiement) peut être automatique ou en réponse à une requête notamment du serveur 3 d'un marchand ou autre.

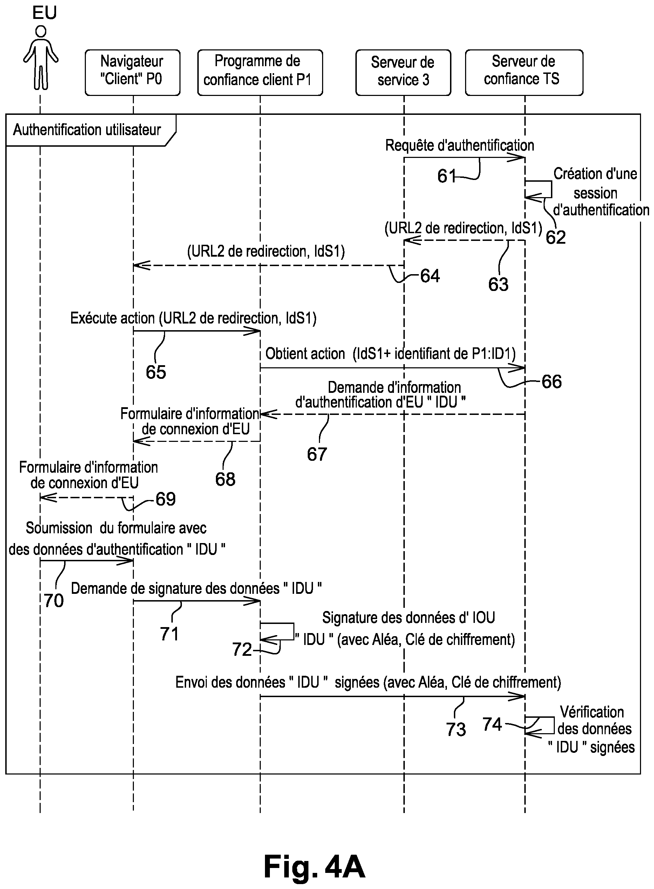

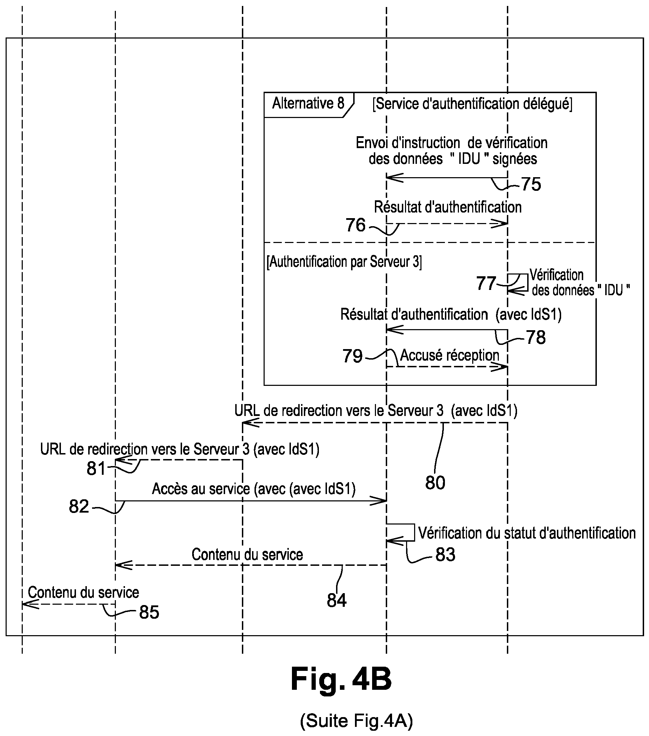

Enfin, le serveur TS peut comprendre de préférence un programme P11, associé ou non à P4, pour réaliser (après provisionnement de l'environnement de confiance selon P4), des opérations sensibles (notamment celles d'authentification de la figure 4) directement ou en sous-traitance notamment du serveur 3.

Le serveur de confiance TS peut comporter ou réaliser tout ou partie des fonctions du serveur 3. Le serveur TS peut réaliser automatiquement ou sur demande directement ou en sous-traitance (délégation) toute fonction du serveur 3 ou fonction supplémentaire telle qu'authentification, déchiffrement, vérification de signature ou de certificat.

Le serveur de confiance TS peut mettre en oeuvre une communication directe E8, E9 avec l'utilisateur hors bande ou non (via unité 2 ou appareil 12) et/ou le serveur 3.

Le serveur TS peut donc comprendre au moins un programme P4 et/ou P11 cumulant ou comprenant tout ou partie des instructions de l'un P4 et/ou autre P11. Dans la description, une référence à P4 ou P11 peut signifier l'un et/ou l'autre indifféremment.

### Concernant le programme P1 « client »

Concernant b) dans l'exemple, le programme de confiance P1 est de type « client ». Il est notamment en mesure de fonctionner en mode client-serveur classiquement connu de l'homme de l'art ou d'adresser simplement des requêtes à un serveur et recevoir des réponses.

Le programme P1 peut être déployé ou mis en place dans le navigateur de l'ordinateur « client » 2 de l'utilisateur EU. Il est ici provisionné par le serveur TS d'un prestataire de services ou associé au prestataire de manière transparente pour l'utilisateur ; Il peut être provisionné par exemple, à la demande du fournisseur de services.

Dans l'exemple, le site internet 3 (ou serveur frontal) du fournisseur de service met en oeuvre un programme de redirection P3 ou une redirection automatique RT2 vers le serveur de confiance TS en arrière-plan.

Ainsi, grâce à l'invention, le déploiement du programme client P1 peut être transparent pour l'utilisateur.

Toutefois, P1 peut être provisionné par tout moyen notamment à l'initiative de l'utilisateur, aisément via sur un clic d'un pointeur sur un lien de téléchargement proposé à l'utilisateur pour améliorer la sécurité de ses transactions. P1 peut être provisionné en chargeant une application à partir de tout support de mémorisation local disque, clé, carte à mémoire, interaction radiofréquence de proximité sans-contact NFC avec une borne externe de chargement.

Le programme P1 « client » peut être mémorisé (par exemple dans des cookies http) de préférence avec toutes les sécurités nécessaires dans l'unité 2, (notamment dans le navigateur ou en dehors du navigateur P0) de l'utilisateur.

Des cookies peuvent généralement comprendre des fichiers informatiques stockés par le navigateur web sur un disque dur d'une unité de traitement (ou terminal utilisateur) accédant à un site web ; Ils ont notamment pour fonction de mémoriser des informations sur un utilisateur ou sur sa navigation internet. Un site internet peut ainsi identifier un visiteur, ses intérêts et adapter les pages à l'utilisateur.
Les cookies sont des chaines de caractères dans lesquels pourraient se trouver le code d'un programme (le logiciel de confiance) ainsi que des données sensibles telles que des clés, certificats.... Si un cookie n'est pas suffisant en taille, plusieurs cookies (stockés en local, dans le cloud associé à un ou plusieurs domaines web) peuvent être associés afin de reconstituer le programme de confiance.

Le programme P1 peut être mémorisé de manière inaperçue dans l'unité 2 par le serveur de confiance notamment en ayant recours à une méthode de type WBC ou autre méthode de chiffrement homomorphique ou tout autre méthode d'offuscation ou de chiffrement permettant de protéger des données sensibles dans un environnement non sécurisé. Ainsi, du code anodin (chiffré ou non) peut être mémorisé dans une mémoire (ou disque dur) de l'unité 2 en relation ou non avec le navigateur P0 ou autre programme PO1 de l'unité.
En outre, l'invention utilise également de préférence des clés de chiffrement et/ou certificats pour un établir un canal de communication sécurisé avec le serveur de confiance ; Ces clés et/ou certificats peuvent être également mémorisés dans l'ordinateur de l'utilisateur notamment dans son navigateur.

Le cas échéant, on peut mémoriser le programme client P1 dans le nuage informatique (cloud en langage anglo-saxon) ou dans un ou plusieurs serveur(s) informatique(s) distant(s).

Le programme P1 « client » peut avoir de préférence les fonctions ci-après. Il gère les opérations (authentification, autorisation ...) avec le serveur de confiance distant TS.

Selon le mode préféré, l'invention comprend une interface matérielle 6 et/ou logicielle P3 de redirection des requêtes de transaction RT1 adressées au serveur de service 3, vers ledit serveur TS.

L'interface 6 et/ou programme P3 notamment de redirection sont de préférence dans le serveur 3 ; Toutefois, ils pourraient être sous forme équivalente dans l'ordinateur d'un utilisateur. Par exemple, tous les utilisateurs ayant un compte chez un site marchand peuvent recevoir par téléchargement, une interface logicielle ou un micro code logiciel qui remplace automatiquement le lien du site marchand par un lien de redirection) qui redirige au moins une partie des transactions ou sessions de communication entre l'ordinateur et un site internet quelconque à partir de l'ordinateur vers un autre serveur de confiance.

L'interface P3 est ici un programme logiciel P3 dans l'ordinateur du serveur 3 et qui peut détecter toute requête de type sensible (achat, authentification....) à sécuriser (prédéterminée par l'entité gérant le site internet 3 et/ou l'utilisateur) ; Les requêtes d'opération sensibles sont redirigées notamment à l'aide d'un lien internet (ou adresse de type URL2) mémorisé dans une mémoire du serveur 3.

Par exemple, lorsque la transaction est en mode HTTPS, un signal du serveur peut activer le programme ou mécanisme de redirection vers un lien URL2 correspondant au serveur de confiance TS. Par exemple encore, le signal peut être déclenché lors d'une phase de validation de commande d'achat sur un site internet ou lors d'une phase de saisie des données bancaires PAN, ou phase d'identification ou authentification à tout moment avancé d'une transaction.

Alternativement, l'interface de communication 6 peut être matériellement un aiguilleur informatique/ électronique dans le serveur (ou associé à lui), qui commute électroniquement pour rediriger requêtes de transaction (ou toute autre données, informations) ou vers un autre serveur ou ordinateur ou un module de sécurité associé physiquement au serveur.

Selon le mode préféré, le système comprend un programme applicatif P4 de réalisation de tout ou partie des transactions. La transaction peut s'effectuer en tout ou partie via une communication sécurisée 9 établie par ledit serveur de confiance TS avec ledit programme client P1 du navigateur P0 en réponse à ladite requête de transaction redirigée RT2.
Le serveur de confiance peut contribuer à renforcer la sécurité de l'opération sécurisée. Le serveur de service peut également continuer à être impliqué dans le processus de la transaction (exemple : le logiciel de confiance côté navigateur signe les informations de connexion (login / mot de passe) de l'utilisateur, la signature est vérifiée par le serveur de confiance et informations de connexion par le serveur de service 3.

Dans l'exemple, le programme P4 est configuré avec instructions permettant d'établir une session (ou canal) de communication sécurisée avec l'ordinateur 2 de l'utilisateur et/ou avec le navigateur P0 et/ou avec le programme client P1 et/ou sous le contrôle de P4.

Le programme P4 comprend donc les attributs (fonctions) d'un programme de type client ou serveur spécifiquement configuré pour établir des sessions de communication (adresser des requêtes et/ou répondre à des messages du serveur) en mode « client » et/ou « serveur ».

### Fonctionnement du système 1.

De manière générale, en fonctionnement, chaque opération sensible entre l'utilisateur EU et le fournisseur de service 3 (via leur ordinateur respectif) est redirigé RT2 vers le serveur de confiance TS puis l'opération est réalisée directement entre le serveur de confiance TS et le programme logiciel client P1. Un programme du serveur TS et/ou le programme P1 peuvent être configurés pour contrôler (prendre la main pour exécuter) l'opération sensible.

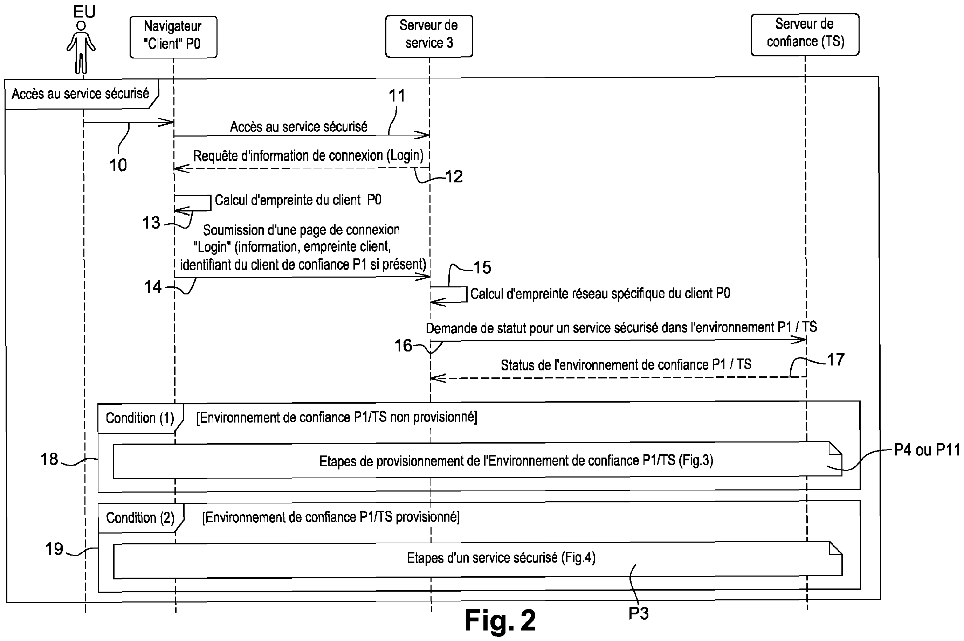

### Illustration du principe de fonctionnement eu égard à une opération sensible d'authentification (fig. 2, 3A, 3B, 4A, 4B).

Un utilisateur EU souhaite accéder de manière sécurisée à un service (par exemple consultation de pages web, stockage de photos dans le cloud...) comprenant une opération sensible (telle une phase d'authentification ou autre) pour l'accès à ce service, à l'aide d'un système 1. Optionnellement, le service auquel l'utilisateur veut accéder est lui-même un service sensible tel authentification, paiement, transfert bancaire ;
- A l'étape 10, l'utilisateur EU ouvre donc son navigateur informatique P0 et se connecte à un site internet d'un fournisseur du service (serveur 3) à l'adresse électronique URL1 ;
- A l'étape 11, le serveur 3, en exécution d'instructions d'un programme d'interface P3 (ou du serveur 3 : P2), émet une requête d'identifiant (ou d'information, login) de connexion, qui est reçue par le navigateur P0 de l'unité 2 ;
- A l'étape 13, le navigateur P0 calcule un identifiant (ou empreinte informatique) du « client » (programme P0 et/ou unité 2 et/ou programme de confiance P1 si présent) ; L'empreinte informatique peut être calculée notamment à l'aide d'une clé de chiffrement (notamment privée ou d'un certificat) stockée en mémoire de unité 2 et à disposition du navigateur P0 (ou P1 si présent). L'empreinte informatique peut se baser sur des données d'identification de l'unité 2 (numéro de série, ou identification du navigateur ou carte réseau...) ;
- A l'étape 14, le navigateur client (P0 ou P1) soumet au serveur 3, une page d'information (ou d'identifiant) de connexion (login) comportant les informations de connexion, une empreinte informatique du « Client » (navigateur P0 et/ou si présent, un identifiant du navigateur client de confiance P1 et/ou de l'unité 2 (ou d'un sous-ensemble de l'unité qu'un tel identifiant d'une carte réseau de l'unité) ;
- A l'étape 15, le serveur 3 (selon des instructions du programme serveur P2) calcule un identifiant réseau (ou empreinte réseau) spécifique du « Client » P0, P1 et/ou de l'unité 2 ;
- A l'étape 16, le serveur 3 (selon des instructions de P2 ou P3) se connecte au serveur TS de confiance et requiert des informations (via commande « obtient statut») sur un éventuel environnement de sécurité « Client P0 ou P1 / Serveur TS » déployé autour du client P0 (ou P1) pour mettre en oeuvre un service sécurisé d'authentification associé au navigateur P0 et/ou programme P1 et/ou à l'ordinateur 2) ;
   Ces informations peuvent comprendre l'identifiant de P0 ou P1 et/ou de l'ordinateur 2, un identifiant de connexion (login), l'identifiant du programme « client » P1, un (ou plusieurs) certificat(s), un identifiant du service sécurisé, une empreinte informatique du client) ;
- A l'étape 17, le serveur TS a reçu la requête (ou commande) sur son interface de communication 8 et en réponse exécute des instructions du programme P4 mémorisé dans une mémoire du serveur TS (notamment tableau susvisé) pour transmettre ces informations de statut de l'environnement de confiance P1/TS ci-dessus qui peuvent être stockées en mémoire du serveur ou ailleurs ;
   Ces informations de statut indiquent notamment si l'environnement (P0 ou P1 /TS) est ou non sécurisé pour le service demandé et conduisent à un programme de test, (à deux conditions 1&2 correspondant aux étapes 18, 19 ci-dessous). Le programme de test peut être stocké en mémoire du serveur de service 3, (par exemple être compris dans P3) et se comporter comme ci-après.
- A l'étape 18 selon une première condition (1) [absence d'un environnement de confiance P1/TS], le serveur 3 (en exécution du programme P4 sous-partie test), analyse les informations de statut reçus et constate une absence d'indicateur d'un environnement de confiance ;
   En conséquence, le serveur 3 procède à la mise en oeuvre d'étapes de mise en place (ou de provisionnement) de cet environnement de sécurité (ou de confiance) P1/TS (décrit en relation avec les figures 3A, 3B) ;
- A l'étape 19 selon une autre condition (2) [existence d'un environnement de confiance P1/TS], le serveur 3, en exécution du programme P4 (sous-partie test), analyse les informations de statut et constate une présence d'un environnement de sécurité P1/TS associé au navigateur P0 ;
   De ce fait, le serveur 3 procède, en exécution de P3, à l'utilisation de cet environnement de sécurité en vue de répondre au service demandé (comprenant une phase d'authentification) par l'utilisateur puis donne accès au service demandé, une fois que l'opération sécurisée (notamment d'authentification) est achevée (décrit en relation avec les figures 4A, 4B).

### Provisionnement d'un environnement de confiance (figs.3A, 3B) [suite à la condition 1]

- Aux figures 3A, 3B et 1, sont illustrées selon un mode préféré, un exemple d'étapes d'installation / enrôlement (ou de provisionnement) du programme « client » P1 dans le navigateur P0 la première fois qu'une opération de sécurité est requise ; Ces étapes correspondent à des étapes de procédé d'un mode de l'invention et/ou partie d'un programme applicatif P4 d'initialisation ou de provisionnement de l'environnement de sécurité P1 / TS pour un traitement sécurisé d'une opération / transaction sensible.

Lorsque une opération / transaction sensible est requise, par exemple, à la suite de l'étape 18 (ou autre étape), l'invention prévoit les étapes ci-après.
- A l'étape 30 (faisant suite notamment à l'étape 18), le serveur 3 du fournisseur de service émet une requête de provisionnement (ou d'initialisation d'actions) auprès du serveur de confiance TS ; A cet effet, le serveur 3 peut transmettre dans la requête notamment un identifiant du locataire (tenant) P0, un identifiant du service sécurisé, une empreinte du « Client » P0, des informations utilisateur EU. Ces dernières informations peuvent comprendre un numéro de téléphone portable pour communication hors bande, un mot de passe, des réponses des questions de sécurité...) ;
- A l'étape 31, le serveur TS crée une session de provisionnement (Chargement / mémorisation) en exécutant P4 ou une sous-partie de P4) ;
- A l'étape 32, le serveur TS communique une adresse électronique de redirection URL2 avec un identifiant de session IdS1 au serveur 3 qui retransmet (étape 33) au navigateur client P0 ;
- A l'étape optionnelle 32bis (non représentée), le serveur TS peut lui-même communiquer directement cette adresse de redirection URL2 au navigateur P0 (ou programme « Client » P1 s'il existe).
- A l'étape 33, l'adresse internet de redirection (URL2) accompagnée de l'identifiant de session IdS1, est reçue par le programme P0 « Client ». Le programme navigateur P0 substitue l'adresse URL1 du serveur 3 par celle URL2 du serveur de confiance TS ;
- A l'étape 34, le navigateur P0 transmet l'identifiant de session IdS1 au serveur TS pour mettre en oeuvre une redirection RT2 ;
- A l'étape non représentée 34bis optionnelle / l'étape 34, le navigateur P0 peut effectuer une redirection automatique (ou avec l'accord de l'utilisateur via une fenêtre affichée sur l'écran de l'ordinateur proposant une session sécurisée) vers le serveur de confiance TS.

Ensuite, une session sécurisée d'authentification peut se dérouler selon les étapes hors bande (35-36 et 39) ou 37-38 ci-dessous :

### Authentification par Serveur TS en exécution de P4 (étapes 35-36 et 39 - Alternative 3)

- A l'étape 35, le serveur peut enclencher de préférence, une session d'authentification via un canal parallèle E8 de type hors bande (différent d'E9 fig.1) avec l'utilisateur, via un autre appareil, tel un téléphone mobile 12. A cet effet, le serveur utilise des données de l'utilisateur comme numéro de téléphone portable, adresse de messagerie) reçues préalablement, par exemple du serveur à l'étape 30 ;
- A l'étape 36, l'utilisateur EU communique au serveur des données d'authentification / identification (par exemple, un code reçu du serveur TS à l'étape ci-dessus ou une autre donnée d'authentification notamment biométriques comme sa voix ou empreinte digitale (ou des données représentatives d'une valeur biométrique comme la voix ou empreinte digitale), une réponse à une question de sécurité...

Les données ci-dessus d'authentification sont retournées au serveur TS soit par le canal E9 et ordinateur 2, soit de préférence (de manière hors bande) via le téléphone mobile 12 et canal E8 ; Certaines données d'authentification peuvent être vérifiées en local comme par exemple les empreintes digitales (non envoyées sur le réseau) au travers d'une application mobile, par exemple associée à ce service de confiance.

Cette vérification hors bande peut également s'effectuer sans application mobile (téléphone portable) en utilisant par exemple de la navigation web mobile ou bien par des échanges de SMS. - Les données d'authentification ont pu être mémorisées dans le serveur 3 dans une étape préalable quelconque (notamment transmis par le serveur 3 au cours de l'étape 30).

### Authentification par le serveur de service 3 en exécution de P4 (étapes 37-38 - Alternative 3)

- A l'étape 37, le serveur TS peut transmettre les données d'authentification utilisateur au serveur 3 (reçues de l'utilisateur à l'étape 36), pour confirmation, via une session sécurisée E7 avec le serveur 3 (fig. 1) ; Elles peuvent comprendre un Identifiant de session ;
- A l'étape 38, le serveur 3 effectue une comparaison des données d'authentification reçues (éventuellement, après déchiffrement des données reçues chiffrées) avec des données d'authentification de référence, stockées au préalable en mémoire du serveur 3 (suite à une transmission des données d'authentification de l'utilisateur à une étape préalable) ; Le serveur 3 retourne ensuite le résultat d'authentification suite à cette comparaison ;

Grâce aux étapes 37-38, le serveur du fournisseur de service conserve un contrôle sur les données sensibles de ses utilisateurs.

### Authentification déléguée au Serveur TS (Alternative 4), en exécution de P4

- A l'étape 39 (suite de l'étape 36 de réception de données d'authentification), le serveur TS agissant au nom du serveur 3, authentifie l'utilisateur en utilisant des données d'authentification stockées en mémoire interne qu'elle compare à des données reçues de l'utilisateur notamment à l'étape 36.

### Obtention de données utilisateur pour le service, en exécution de P4

- A l'étape 40 (suite de l'étape 38 ou 39) après authentification réussie, le serveur TS requiert (de préférence par canal hors bande E8) des données de paiement (et/ou information d'identification pour le paiement) pour accéder au service offert par le fournisseur de service 3 ;
- Puis à l'étape 41, ces données de paiement (ou information d'identification pour le paiement, numéro de carte bancaire, PAN...) sont retournées (de préférence via le même canal E8) ;

### Données de service déléguées au le serveur 3 (Alternative 4)

- Les étapes 42 et 43 viennent suite à l'étape 42, (le fournisseur de service 3 conservant la main sur les données de paiement), le serveur TS retransmet (42) les données (ou information) de paiement ci-dessus au serveur 3 (en exécution de P4) pour les créer au niveau serveur 3, via notamment le canal E7 (de préférence sécurisé) puis le serveur 3 retourne (43) un accusé réception (ACK).

### Données de service (information de paiement) déléguées au (ou gérées par le) serveur TS (Alternative 4) en exécution de P4

- A l'étape 44 (suite de l'étape 41), le serveur TS agissant au nom du serveur 3, mémorise les données (ou information) de paiement de l'utilisateur pour le service demandé. Le serveur TS peut ainsi intervenir ultérieurement au nom du fournisseur de service (en sous-traitance) pour des étapes de paiement.
   Le programme « Client » P1 est spécifique à un navigateur client P0 et partage une clé de chiffrement avec le serveur TS
- A l'étape 45 (suite à aux étapes 43 ou 44), le serveur TS génère le programme de confiance « client » P1. Ce dernier est spécifique au navigateur client P0 non sécurisé ; P1 comprend de préférence une clé (notamment secrète) partagée avec le serveur TS. Ce programme P1 permet de transformer le client P0 non sécurisé en un client sécurisé (avec le client P1 de confiance).

### Mémorisation du Programme « Client » P1.

Pour cette étape, l'invention peut comprendre les sous-alternatives ci-après (étapes 46-47 préférées pour une mémorisation dans le navigateur ou étapes 48-50 pour une mémorisation dans le nuage).

### Mémorisation en local dans le navigateur P1 (Alternative 5) :

- A l'étape 46 préférée, le serveur TS peut transmettre un ou des cookie(s) relatif(s) au programme P1 via le canal sécurisé E9 au navigateur P0. En fait, le cookie peut être un moyen préféré qui est utilisé par le serveur TS pour stocker le programme de confiance ainsi que les données dans le navigateur.

Et, à l'étape 47, le navigateur P0 mémorise le programme de confiance « client » P1 dans l'ordinateur de l'utilisateur ;

### Mémorisation dans le nuage informatique (cloud) (Alternative 5) :

- A l'étape 48, (alternative des étapes 46-47), le procédé prévoit une mémorisation du programme P1 dans le nuage ou réseau internet (cloud) ; Dans l'exemple, ce programme P1 peut être stocké dans le serveur TS (ou ailleurs dans le nuage) ;
- Puis à l'étape 49, le serveur TS transmet un cookie au navigateur P0 (ou unité 2) relatif à l'identifiant du programme client P1 afin d'être mémorisé localement (étape 50) dans une mémoire de l'unité 2 ou de manière associé au navigateur P0.
- A l'étape 51, le navigateur T0 renvoie un accusé réception ACK au serveur TS ;
- A l'étape 52, en exécution du programme P4, le serveur TS transmet au navigateur P0 un lien de redirection URL1 (cookie ou données équivalentes) permettant (étape 53) de rediriger le navigateur PO vers le serveur de service 3 afin de poursuivre l'opération demandée de l'étape 10 initiale (ou de poursuivre en basculant à l'étape 19 de la figure 2) ;
- Enfin à l'étape 54, le serveur de service 3 (en exécution du programme P3) donne au navigateur P0 (ou à l'utilisateur EU) un accès au service proposé par le fournisseur de service 3 ci-après (figs.4A et 4B).

### Exemple de flux d'authentification d'utilisateur (figs.4A et 4B) en exécution d'un programme P11 côté serveur

Les figures 4A et 4B illustrent un exemple de fonctionnement de l'environnement sécurisé de confiance de l'invention pour authentifier l'utilisateur sur un site internet.

L'utilisateur fournit toujours ses informations d'identification / authentification (identifiant / mot de passe) comme d'habitude, mais ils sont ici dans l'exemple signés SI par le programme de type « client » P1 et accompagné d'un identifiant « ID1 » du client P1 mémorisé notamment aux étapes 46 ou 49. Une signature SI peut ensuite être vérifiée (déchiffrée) notamment par le serveur de confiance TS en exécution d'un programme P11, agissant au nom du serveur 3 ou par le serveur 3 lui-même comme expliqué ci-après.
- Ainsi, à l'étape 60 (non illustrée), suite à une demande du navigateur P0 d'un service sensible P2, le serveur 3 (pour permettre un accès à son service P2), émet une requête d'authentification 61 auprès du serveur de confiance TS; Cette requête est déclenchée par le programme P3 (qui peut comprendre en sous-partie un programme d'analyse de risque ou autre test déclenchant la nécessité d'un environnement de confiance). La demande de service est identifiée et considérée par le programme d'interface P3 du serveur 3 comme une requête sensible ou à sécuriser ;
- A l'étape 61 (puis 62), le programme P3 exécuté par le serveur 3, fait émettre une requête d'authentification, avec un identifiant « ID1 » du client P1 (ou retransmet la requête), auprès du serveur TS de confiance, lequel en exécution d'un programme P11, ouvre ou crée localement 62 une session (ou exécute un programme) d'authentification P11 ;
- Aux étapes 63 - 64, le serveur transmet au navigateur P0 de l'ordinateur de l'utilisateur via le serveur 3 une adresse URL2 de redirection et un identifiant de session (IdS1) ;
- A l'étape 65, le navigateur P0 transmet l'adresse URL2 de redirection avec l'identifiant de session (IdS1) au programme client P1 de confiance. Le programme P1 (qui peut être stocké dans des cookies) peut faire partie intégrante du site web du serveur de service (ou serveur TS) et il peut ne pas y avoir d'actions à capter.

Les pages web peuvent interagir directement avec le programme ou navigateur de confiance client P1 ; Le contenu des pages web peut comprendre des micros programmes ou cookies qui sont stockées ou exécutés par le navigateur P0 lors de leur chargement dans l'unité 2 notamment pour les afficher ou visualiser.
Le programme P0 demande au client P1 d'exécuter l'action notamment d'authentification ;
- Puis à l'étape 66, le client P1 exécute l'action (ou obtient du navigateur P0) ou une redirection de la communication internet à l'adresse URL2 correspondant au serveur de confiance TS et avec l'identifiant de session « IdS1 » ;
- A l'étape 66, le programme « client » P1 fonctionne en mode client-serveur et transmet une requête d'action notamment d'authentification au serveur TS en lui communiquant l'identifiant de session IdS1 et l'identifiant ID1 du programme « client » de confiance P1 ;
- A l'étape 67, le serveur TS fonctionne en mode serveur vis-à-vis du client de confiance P1 et répond (selon P11) par une requête visant à obtenir les informations d'identification /authentification de l'utilisateur IDU ;
- A l'étape 68, le programme « client » P1 de confiance transmet la requête au navigateur P0 pour une interaction avec l'utilisateur EU notamment en demandant 69 à ce dernier d'afficher sur un écran de l'ordinateur un formulaire avec des champs d'information ou identification de connexion à remplir ;
- A l'étape 70, l'utilisateur EU saisie les informations d'identification IDU demandées (nom utilisateur, mot de passe) dans le formulaire à l'aide notamment d'un clavier de saisie et le soumet une fois rempli ;
- A l'étape 71, le navigateur P0 transmet les informations IDU du formulaire au programme « client » P1, avec une demande de signature ou de chiffrement des informations d'authentification IDU ;
- A l'étape 72, le programme P1 effectue le chiffrement (signature) des informations IDU ci-dessus avec une clé secrète parmi au moins une clé générée notamment à l'étape 45 et mémorisée (notamment lors de l'étape 47 ou 48) et avec par exemple un aléa) ;
- A l'étape 73, le programme client P1 transmet les informations IDU chiffrées ou signées ci-dessus au serveur TS de confiance avec l'aléa ; Le serveur TS procède (selon P11) à une étape de vérification (déchiffrement) 74 de deux manières possibles ci-après (75 ou 77) ;

### Alternative 8 :

- Pour une authentification par le serveur de service 3 : A l'étape 75, le serveur TS de confiance transmet les informations IDU chiffrées (avec identification de session, aléa) au serveur 3 pour déchiffrement (vérification) et retourne le résultat 76 ;
- Pour un service d'authentification délégué : A l'étape 77 (option préférée de l'étape 75), le serveur TS peut effectuer le déchiffrement (ou vérification) lui-même des données d'authentification « IDU » en question, par délégation, sous-traitance ou au nom du serveur 3 ;
- A l'étape 78, le serveur TS retourne au serveur 3 notamment via une communication sécurisée E7, le résultat de l'authentification et l'identifiant de session (IDS1), lequel peut en accuser la réception (ACK) 79 ;
- A l'étape 80 (selon P11), le serveur TS transmet au programme « client » P1 une adresse de redirection URL1 vers le serveur 3 (avec l'identifiant de session (IDS1) ; lequel P1 retransmet au navigateur P0 (étape 81) ;
- A l'étape 82, le navigateur P0 effectue une connexion au serveur 3 (avec l'identifiant de session « sessionID1 » pour bénéficier d'un service proposé P2 du fournisseur de service ;
- A l'étape 83 (selon P11), le serveur 3 vérifie le statut d'authentification effectué précédemment à l'étape 78 ou alternativement mémorisé dans le serveur TS à l'étape 76 ;
- A l'étape 84, le serveur 3 fournit l'accès au service proposé P2 (notamment un contenu du site internet du serveur 3) au navigateur P0 de l'ordinateur 2 et ce dernier affiche le contenu des pages à l'écran de l'ordinateur pour l'utilisateur.

Plus précisément concernant l'étape 61, le programme « client » P0 interagit avec l'utilisateur EU, le serveur TS (et le cas échéant avec le fournisseur de service) pour effectuer l'opération sécurisée (ou sensible) ; L'interaction peut s'effectuer notamment en échangeant des informations chiffrées à l'émission (puis déchiffrées à la réception) avec une clé de session déterminée au préalable et utilisée par le programme client P1 et du serveur TS (P11).

Une fois l'opération sensible terminée, le résultat de l'opération est renvoyé au fournisseur de service 3. Le résultat peut être notamment être communiqué à l'utilisateur soit par le programme « client » P1 soit par le serveur TS.

Dans cet exemple, dans le cas où il peut être encore possible de subtiliser les informations d'identification de l'utilisateur (login, mot de passe...) avec un détecteur de frappe de clavier par exemple, elles deviennent inutiles si non chiffrés par le programme «client» P1 (un mécanisme d'identification certifié / sécurisé empêche d'extraire le programme « client » P1 d'un navigateur pour l'exécuter dans un autre.
Avantageusement, les données peuvent être chiffrés et également signés. Un avantage de l'invention est par exemple si on ne peut pas protéger la capture des informations de connexion (login/mot de passe) (par un détecteur de frappe par exemple) mais que les informations de connexion toutes seules sont inutilisables si non signées par P1 avec une vérification de la signature par TS. Le serveur de service 3 garde ensuite la responsabilité de vérifier les informations de connexion en ayant la garantie de l'étape préalable de vérification de la signature par le serveur TS L'invention permet d'autres applications sécurisées de l'environnement de confiance ci-après :
- L'authentification des utilisateurs sur les sites Web ;
- L'affichage à distance : Un clavier alphanumérique peut être affiché dans le téléphone portable de l'utilisateur à la place du navigateur de l'unité 2 pour empêcher les attaques de détection de frappe de clavier ;
- Les transactions de paiement : sécurisation de transactions de commerce électronique à partir du navigateur ;
- La signature : signer des documents et des opérations dans le web.

L'invention a pour avantage de créer un environnement sécurisé ou de confiance de manière transparente ou quasi transparente pour un utilisateur.

De même, pour les fournisseurs de service, l'invention permet de faire évoluer un service non sécurisé vers un service sécurisé.

Ainsi, un service d'un prestataire non sécurisé à l'origine peut évoluer vers un service sécurisé en toute transparence ou de manière très pratique sans intervention de l'utilisateur. Une requête d'opération initialement non sensible à laquelle est habitué un utilisateur peut déclencher auprès du serveur 3 une opération sensible, notamment car le prestataire de service a décidé d'ajouter de la sécurité ou de mettre à jour la sécurité dans son environnement serveur.

A cet effet ci-dessus également, l'invention peut avoir pour objet un procédé pour déployer un environnement de confiance dans un environnement informatique et/ou de communication notamment sur internet non sécurisé pour sécuriser au moins une opération sensible entre une unité de traitement comprenant un navigateur informatique et un serveur de service d'un réseau de communication caractérisé en ce qu'il comprend les étapes suivantes :
- installation d'un serveur de confiance (TS) comprenant un programme de gestion à distance d'un cycle de vie d'un programme de confiance P1 de type client, destiné à être mémorisé dans un navigateur (P0) ou dans une unité de traitement (2) ou dans le réseau de communication (5),
- mémorisation dans le serveur de confiance (ou dans une base de données en relation avec lui) d'un ensemble de statuts, chaque statut de l'ensemble étant relatif à l'environnement de sécurité de chaque client P0 ou chaque unité 2 ou chaque utilisateur EU,
- à chaque requête d'opération sensible reçue par le serveur de service (ou autre moment tel session de communication avec un utilisateur), émission par le serveur de service d'une requête de consultation auprès du serveur de confiance pour avoir des informations de statut du client P0 ou de l'unité 2 ou de l'utilisateur notamment pour effectuer ladite opération sensible (ou autre opération ou avoir des informations générales de sécurité),
- émission par le serveur de service auprès du serveur de confiance, d'une requête de mémorisation ou de déploiement ou de provisionnement du programme de confiance P1 dans ledit navigateur (P0) ou dans ladite unité de traitement (2) ou dans ledit réseau de communication (5).

Alternativement, l'ensemble de statuts de sécurité peut être mémorisé dans le serveur de service ou à disposition de ce dernier plutôt que dans le serveur de confiance. Ainsi, le serveur de service peut avoir directement l'information d'un besoin ou non d'un provisionnement d'un programme de confiance P1 qu'il peut requérir auprès du serveur de confiance opérant notamment en sous-traitance pour le serveur de service ou plusieurs fournisseurs de service distincts ou indépendants.

L'opération sensible peut ensuite être réalisée en tout ou partie notamment entre ledit serveur de confiance (TS) et ledit programme de confiance (P1) suite au provisionnement.

Par exemple, des informations telles que identifiant / mot de passe peuvent être chiffrées par le programme de confiance P1 (idem ou similaire à l'étape 72) lors d'une opération ; puis ces dernières sont envoyées (idem ou similaire à l'étape 73) au serveur de confiance par le navigateur P1 ou P0 ou l'unité 2 ; ensuite le serveur de confiance vérifie (déchiffre ces informations étape 74).
Ensuite le serveur TS peut donner un résultat (idem ou similaire à l'étape 78) au serveur de service 3 qui peut poursuivre l'opération, ou TS peut transmettre les informations déchiffrées au serveur de service qui contrôle (ou compare) les informations déchiffrées reçues pour permettre ou non une poursuite de l'opération demandée.

Alternativement, une fois que le déploiement d'un programme de confiance P1 est effectué notamment par le serveur de confiance TS dans P0 ou dans l'unité 2, toute ou partie de l'opération demandée par EU peut s'effectuer directement entre le l'unité 2 et le serveur de service 3.

Alternativement à tous les modes décrits, l'invention peut prévoir de déployer, provisionner un ensemble d'unités informatiques à distance à l'aide notamment d'un serveur TS, sur la base d'un ensemble d'adresse d'utilisateur ou de leur navigateur ou identifiant d'unité. Donc, il n'est pas nécessaire d'effectuer ce provisionnement en réponse à une requête d'opération sensible (mode préféré). Ce mode est préféré notamment pour provisionner en toute transparence pour l'utilisateur. Toutefois, un provisionnement selon tous les modes décrits peut être effectué avec intervention même minime de l'utilisateur.

## Revendications

1. Procédé pour sécuriser une opération sensible entre une unité de traitement comprenant un navigateur informatique et un serveur de service d'un réseau de communication (5), une requête (RT1) pour ou déclenchant ladite opération sensible étant adressée au serveur de service (3), **caractérisé en ce qu'**il comprend les étapes suivantes :
- installation d'un serveur de confiance (TS) et mémorisation d'un programme de confiance (P1) de type client dans le navigateur (P0) ou dans l'unité de traitement (2) ou dans le réseau de communication (5),
- redirection (RT2) de ladite requête (RT1) d'opération sensible vers ledit serveur de confiance (TS),
- réalisation de tout ou partie de ladite opération sensible entre ledit serveur de confiance (TS) et ledit programme de confiance (P1) suite à ladite redirection.

2. Procédé selon l'une des revendications précédentes, **caractérisé en ce que** le programme client (P1) est mémorisé en sécurité par le serveur de confiance (TS) ou par un chargement sécurisé.

3. Procédé selon l'une des revendications précédentes, **caractérisé en ce que** des clés de chiffrement sont mémorisées dans l'ordinateur (2) de l'utilisateur, notamment dans son navigateur (P0), pour un établir un canal de communication sécurisé (E9) avec le serveur de confiance (TS).

4. Procédé selon la revendication précédente, **caractérisé en ce que** le navigateur (P0) est un navigateur internet et la communication s'effectue sur le réseau internet (5).

5. Système (1) pour sécuriser une opération sensible entre une unité de traitement (2) comprenant un navigateur informatique (P0) et un serveur de service (3) d'un réseau de communication, ledit serveur de service (3) comprenant une interface matérielle (6) et/ou logicielle (P2) configurée pour recevoir une requête pour ou déclenchant ladite opération, ledit système étant **caractérisé en ce qu'**il comprend :
- un serveur de confiance (TS),
- un programme de confiance (P1) de type client mémorisé dans le navigateur (P0) ou dans l'unité de traitement (2) ou dans le réseau de communication (5),
- une interface matérielle (6) et/ou logicielle (P3) de redirection pour rediriger (RT2) vers ledit serveur (TS), ladite requête (RT1) d'opération sensible,
- au moins un programme serveur de confiance (P4, P11) dans le serveur de confiance (TS) pour gérer un cycle de vie du programme de confiance P1 et/ou pour réaliser toute ou partie de ladite opération sensible entre ledit serveur de confiance (TS) et ledit programme de confiance (P1), suite à ladite redirection (RT2).
